# EUROPEAN PATENT SPECIFICATION

(11) **EP 1 445 439 B1**
(45) Date of publication and mention of the grant of the patent: **10.05.2006**
(21) Application number: 04000861.7
(22) Date of filing: 16.01.2004
(51) Int. Cl.: F01N 3/20, F01N 3/36, B01D 53/86

(54) **Method for regenerating the oxidation catalyzer of the exhaust gases of an internal combustion engine**
Verfahren zum regenerieren eines Oxydations Katalysators von Abgasen einer Brennkraftmaschine
Méthode de régénération d'un catalyseur d'oxidation des gaz d'échappement d'un moteur à combustion interne

(30) Priority: 06.02.2003 FI 20030196
(43) Date of publication of application: 11.08.2004
(73) Proprietor: Wärtsilä Finland Oy, 65380 Vaasa (FI)
(72) Inventor: Klimstra, Jacob, 9286 GA Twyzel (NL); Torrkulla, Jan, 66600 Vöra (FI); Sandelin, Kristoffer, 65100 Vasa (FI)
(74) Representative: Zipse + Habersack

(56) References cited:
- EP-A- 1 085 177
- WO-A-01/19500
- WO-A-01/51178
- US-A- 5 665 321
- PATENT ABSTRACTS OF JAPAN vol. 011, no. 317 (C-452), 15 October 1987 (1987-10-15) & JP 62 106826 A (NIPPON SHOKUBAI KAGAKU KOGYO CO LTD), 18 May 1987 (1987-05-18)

## Description

The present invention relates to a method according to the preamble of claim 1.

Oxidation catalysers are used for oxidizing the hydrocarbons contained by exhaust gases from various processes. For example, exhaust gases from internal combustion engines can contain various unburned hydrocarbons. Catalysers are commonly used for oxidizing them prior to releasing them to the atmosphere. Catalysers are, however, delicate, and they can be contaminated, i.e. their working capacity can be reduced, due to the presence of certain substances. Oxidation catalysers are especially prone to sulphur contamination. It is, however, known that in reducing conditions hydrogen (H₂) can react with sulphur, forming H₂S. Such a removal of sulphur restores the operation capacity of the catalyser.

In large engines, it is difficult to regenerate oxidation catalysers of the exhaust gases, in other it is words difficult to restore the operation capacity of the catalysers. The running periods of engines are long and the exhaust gases are not reducing gases, at least not sufficiently to a sufficient degree.

According to prior art document JP-A-62106826 a catalyst system is disclosed, wherein NOₓ oxidised and adsorbed by the catalyst is reduced and removed by feeding reducing agent into the catalyst for regenerating the same.

It is an object of the invention to provide an arrangement and a method for considerably improving the operation of an oxidation catalyser of especially large engines.

The aims of the invention are mainly achieved as disclosed in the appended claim 1 more closely explained in claim 2.

The regeneration arrangement of an oxidation catalyser for an internal combustion engine according to the invention, in which arrangement an oxidation catalyser for hydrocarbons is connected to the exhaust channel of an internal combustion engine, the regeneration arrangement comprising a source for the reducing gas, is mainly characterized by that in order to achieve regeneration, an arrangement producing reducing gas has been connected to the exhaust gas channel prior to said oxidation catalyser for conveying reducing gas into the oxidation catalyser. Such an arrangement allows the oxidation catalyser to be regenerated in the desired situation in case the oxidation catalyser has been contaminated.

Regenerating an oxidation catalyser requires a sufficiently high temperature. One of the basic ideas of the present invention is to use the heat accumulated into the catalyser during normal use for the regeneration.

According to one embodiment, a by-pass channel has been arranged into the exhaust gas channel for by-passing the oxidation catalyser, whereby exhaust gas can be directed past the oxidation catalyser. In addition, in this case the arrangement producing reducing gas is connected to the exhaust gas channel between the branch of the by-pass channel, located before the catalyser in the flow direction of the gas, and the oxidation catalyser. The arrangement producing the reducing gas comprises a fuel source and a fuel reformer producing reducing gas from the fuel. The arrangement producing reducing gas is preferably connected to the exhaust gas channel via a first closing means and the closing means is preferably functionally connected to a control apparatus for controlling the closing means. The by-pass channel is provided with a second closing means and the exhaust gas channel is accordingly provided with a third closing means, the closing means also being connected to the control apparatus for controlling the closing means.

In a method according to the invention for regenerating the oxidation catalyser of the exhaust gases of an internal combustion engine exhaust gases of an internal combustion engine are passed through the oxidation catalyser during normal running of the engine and the oxidation catalyser is regenerated at the desired moment by bringing reducing gas in contact with the catalyser. The method according to the invention is mainly characterised in that at least during regeneration the amount of the engine exhaust gas flowing through the catalyser is reduced in comparison to normal running situation.

According to one embodiment of the invention the flow of the engine exhaust gas is reduced by stopping the engine. During this period reducing gas can be directed into the oxidation catalyser for repairing the catalyser.

For carrying out the method, the temperature of the oxidation catalyser is measured and the temperature information is read by a control apparatus, under control of which the flow of reducing gas into the oxidation catalyser is stopped as the temperature of the oxidation catalyser falls below a certain set value.

Reducing gas is produced by a separate arrangement for producing reducing gas. The detailed way of actually producing the reducing gas is not essential as far as the invention is concerned, but various solutions can be used for this. It is an option to use an arrangement, in which reducing gas is produced by means of incomplete oxidation of fuel.

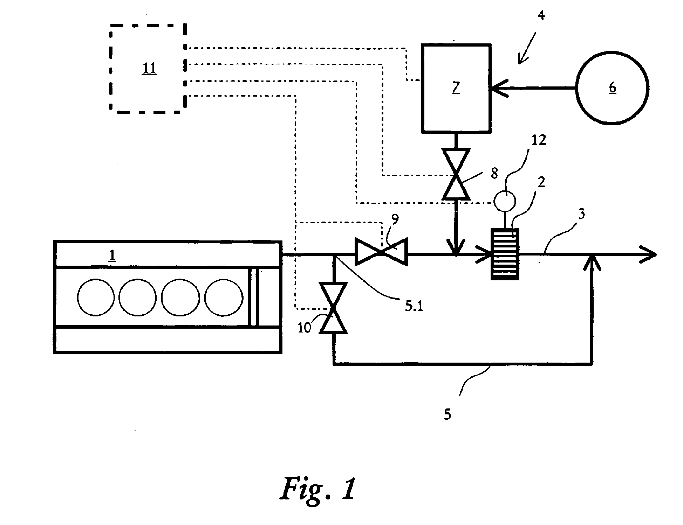

In the following, an example of the invention is explained, with reference to the appended drawing, in which figure 1 is a schematic illustration an arrangement according to the invention.

Figure 1 shows a connection in which a regeneration arrangement of an oxidation catalyser 2 has been arranged in connection with an internal combustion engine 1. In the regeneration arrangement an oxidation catalyser 2 for hydrocarbons contained by exhaust gases is connected to the exhaust gas channel 3 of an internal combustion engine 1, by means of which catalyser the hydrocarbons contained by the exhaust gases can be oxidized. The arrangement further comprises an arrangement 4 acting as a source of gas for producing gas, the arrangement comprising a fuel source 6, such as a tank, and a fuel reformer 7, by means of which, for example, an incomplete oxidation process of fuel can be carried out. The fuel reformer 7 is connected to the exhaust gas channel before the said oxidation catalyser 2 in the direction of gas flow via a first closing means 8, whereby the flow of reducing gas into the exhaust gas channel can be controlled as desired. The control is carried out by means of a control apparatus 11. The arrangement also comprises a by-pass channel 5 for bypassing the oxidation catalyser 2, whereby the reformer 7 is connected to the exhaust gas channel 3 between the branch 5.1 of the by-pass channel 5, located before the catalyser in the flow direction of the gas, and the oxidation catalyser 2. The by-pass channel 5 is provided with another closing means 9, which is functionally in connection with a control apparatus 11 for controlling the closing means. The exhaust gas channel 3 is accordingly provided with a third closing means 10 after the branch of the by-pass channel, the closing means being functionally in connection with a control apparatus 11 for controlling the closing means.

During normal operation of the internal combustion engine the exhaust gases are directed through the oxidation catalyser 2. It is possible that the oxidation catalyser contaminates with age; especially sulphur contamination is typical for oxidation catalysers. In this case its capability of catalysing desirable reactions will be considerably reduced. In order to restore the operational capacity of the catalyser, the oxidation catalyser 2 is regenerated at the desired moment by directing reducing gas in contact with the catalyser. According to the invention this is carried out by at least during regeneration reducing the amount of the engine exhaust gas flowing through the catalyser in comparison to normal running situation. To achieve this, control apparatus 11 is used for closing the valve means 9 and opening the valve means 10. Thereby the exhaust gases of the engine 1 flow through the by-pass channel 5 and the flow to the oxidation catalyser is terminated. The valve means 8 is opened at this phase at the latest. Thus, reducing gas can flow into the oxidation catalyser 2 and the catalyser can be regenerated while the engine is running. Reducing gas can be directed to the catalyser 2 either until regeneration has fully happened or until it can be seen from the temperature measurement 12 that the temperature has fallen too low for regeneration to happen.

It is normal that the engine will be stopped in any case from time to time, and the importing of reducing gas can be advantageously scheduled to take place after the engine has been turned off, whereby heat accumulated by the catalyser is used in the regeneration reaction. Thus, the valve means 8 is opened after stopping the engine for directing reducing gas into the catalyser 2.

The invention is not limited to the embodiment described here, but a number of modifications thereof can be conceived of within the scope of the appended claims.

## Claims

1. A method for regenerating an oxidation catalyser (2) of the exhaust gases of an internal combustion engine (1), in which method the exhaust gases of the internal combustion engine are directed through the oxidation catalyser (2) during normal operation of the engine and in which method the oxidation catalyser (2) is regenerated at the desired moment by bringing reducing gas in contact with the catalyser (2) while at the same reducing the amount of the engine exhaust gas flowing through the catalyser (2),
**characterized in that** the temperature of the oxidation catalyser(2) is measured and the temperature data are read by a control apparatus (11) under control of which importing of reducing gas into the oxidation catalyser (2) is stopped as the temperature of the oxidation catalyser (2) falls below a certain set value.

2. A method according to claim 1, **characterized in that** the reducing gas is produced by a separate arrangement (4) for producing reducing gas.

## Patentansprüche

1. Verfahren zum Regenerieren eines Oxidationskatalysators (2) für die Abgase einer Verbrennungskraftmaschine (1), bei welchem Verfahren die Abgase der Verbrennungskraftmaschine während des normalen Betriebs der Maschine durch den Oxidationskatalysator (2) geleitet werden, und bei welchem Verfahren der Oxidationskatalysator in einem gewünschten Moment regeneriert wird, indem Reduktionsgas in Kontakt mit dem Katalysator (2) gebracht wird, während gleichzeitig die Menge der Abgase der Maschine, die durch den Katalysator (2) fließt, verringert wird, **dadurch gekennzeichnet, dass** die Temperatur des Oxidationskatalysators (2) gemessen wird, und die Temperaturdaten durch eine Steuervornchtung (11) gelesen werden, unter deren Steuerung die Einbringung des Reduktionsgases in den Oxidationskatalysator (2) gestoppt wird, wenn die Temperatur des Oxidationskatalysators (2) unter einen gewissen Schwellenwert fällt.

2. Verfahren nach Anspruch 1, **dadurch gekennzeichnet, dass** das Reduktionsgas durch eine separate Anordnung (4) zur Produktion von Reduktionsgas erzeugt wird.

## Revendications

1. Méthode destinée à régénérer un catalyseur d'oxydation (2) des gaz d'échappement d'un moteur à combustion interne (1), méthode dans laquelle les gaz d'échappement du moteur à combustion interne sont dirigés à travers le catalyseur d'oxydation (2) pendant le fonctionnement normal du moteur et méthode dans laquelle le catalyseur d'oxydation est régénéré au moment souhaité en amenant le gaz réducteur en contact avec le catalyseur tout en réduisant la quantité de gaz d'échappement du moteur circulant à travers le catalyseur,
**caractérisée par le fait que** la température des catalyses d'oxydation est mesurée et les données de température sont lues par un appareil de commande (11) sous la commande duquel l'apport de gaz réducteur dans le catalyseur d'oxydation est stoppé dès que la température des catalyses d'oxydation descend au-dessous d'une certaine valeur déterminée.

2. Méthode selon la revendication 1,
**caractérisée par le fait que** le gaz réducteur est produit par un dispositif séparé (4) destiné à produire du gaz réducteur.
